# EUROPÄISCHE PATENTSCHRIFT

(11) **EP 1 359 196 B1**
(45) Veröffentlichungstag und Bekanntmachung des Hinweises auf die Patenterteilung: **21.06.2006**
(21) Anmeldenummer: 03008625.0
(22) Anmeldetag: 15.04.2003
(51) Int. Cl.: C08L 77/00, C08K 3/34, C08K 7/10, C08K 7/00

(54) **Schichtsilikatverstärkte Polyamid-Zusammensetzung**
Polyamide composition reinforced with layered silicate
Composition de polyamide renforcée par des silicates lamellaires

(30) Priorität: 03.05.2002 DE 10219817
(43) Veröffentlichungstag der Anmeldung: 05.11.2003
(73) Patentinhaber: REHAU AG + Co, 95111 Rehau (DE)
(72) Erfinder: Steffl, Udo, 95111 Rehau (DE)

(56) Entgegenhaltungen:
- EP-A- 1 076 077
- US-A- 4 739 007
- US-A- 5 650 466

## Beschreibung

Die vorliegende Erfindung betrifft eine silikatverstärkte, hochtemperaturbeständige thermoplastische Zusammensetzung auf der Basis von Polyamid.

Durch lonenaustausch mit organischen Ionen organophil modifizierte, anorganische Schichtverbindungen, insbesondere Zwei- und Drei-Schicht-Silikate, wie z. B. der Smektit-Tonerden, sind bereits seit mehreren Jahrzehnten dem Fachmann bekannt.

So wurde das Grundprinzip der organophilen Modifizierung von Natriummontmorilloniten und Natrium-Hektoriten durch lonenaustausch mit Alkylammoniumionen, die bevorzugt mindestens einen Alkylsubstituenten mit mehr als 6 Methylgruppen enthalten, bereits von U. Hoffmann (Angewandte Chemie 1956, 68, Seite 53 ff.) und A. Weiß (Angewandte Chemie 1963, 75, Seite 113 ff.) vorgestellt. Durch den lonenaustausch wird eine Aufweitung des Schichtabstandes erzielt, die sich durch Röntgenbeugung und Transmissionselektronenmikroskopie nachweisen lässt.

Wie im Review von M. Alexandre (Materials Science and Eng. 2000, 28:1ff.) beschrieben, sind thermoplastische Nanocomposite mit Polyamid, Polypropylen oder Poly(ethen-co-vinylacetat) als Matrix bekannt.

Es ist inzwischen Stand der Technik, dass Polymere durch die Einarbeitung von organophil modifizierten, anorganischen Schichtverbindungen hinsichtlich Steifigkeit und/oder Dimensionsstabilität verbessert werden können. Nanocomposite auf Polyamidbasis weisen im Allgemeinen auch eine Erhöhung der Sperrwirkung gegen Gas-oder Flüssigkeitspermeation auf. Teilweise kann es auch zu einer Reduzierung der Brennbarkeit kommen.

Beispielsweise beschreibt die DE 19854170 eine Zusammensetzung, die im Wesentlichen aus
a) einem thermoplastischen Kunststoff
b) einem Schichtsilikat
c) einem Kautschuk mit definierter Teilchengrößenverteilung
besteht. Das Verbundmaterial besitzt ein, bezüglich Steifigkeit zu Schlagzähigkeit ausgeglichenes Eigenschaftsprofil. Eine Erhöhung der Wärmeformbeständigkeit wird jedoch nicht offenbart.

In der US 5206284 wird Polypropylen zur Erhöhung der Wärmeformbeständigkeit und Schlagzähigkeit mit Polyamid-Nanocompositen gemischt. Dabei wird Polyamid mit eingelagerten, exfolierten Schichtsilikaten in der Polypropylenmatrix dispergiert. Durch Zusatz eines gepfropften, unpolaren Polymers wird die Anbindung der Polyamidphase an die Polypropylenmatrix erreicht.
Die Wärmeformbeständigkeit wird hier jedoch nicht signifikant über das Polypropylenniveau angehoben: Die HDT nach ASTM D 648 liegt hier zwischen 111° und 129° C.

Wie dem Fachmann bekannt ist, können zur Erhöhung der Wärmeformbeständigkeit von Polyamid 6 diesem Poly(styrol-co-maleinsäureimid)-Copolymere zugesetzt werden. Ein Einsatz von bisterminierten Polyamiden, wie Polyamid 66, Polyamid 46 oder Polyamid MXD6 ist jedoch auf Grund der unvermeidlichen Vernetzungsreaktion zwischen den Aminoendgruppen des Polyamids und den Maleinsäureanhydridgruppen des Poly(styrol-co-maleinsäureimid)-Copolymeren nicht möglich. Zusammensetzungen auf dieser Basis weisen ein schlechtes Eigenschaftsprofil auf: Eine Bestimmung der Fließfähigkeit, gemessen über den Schmelzindex nach DIN ISO 1133 bei 280°/5 kg ist teilweise nicht mehr möglich. Im gleichen Maße wie der Schmelzindex sinkt auch die Schlagzähigkeit mit zunehmender Vernetzung ab. Wie im Vergleichsbeispiel 2 zu erkennen ist, bleibt auch die Wärmeformbeständigkeit dieser Zusammensetzung für viele Anwendungen auf zu niedrigem Niveau: Der VICAT-B50-Wert nach DIN ISO 306 beträgt 134° C bzw die HDT nach DIN EN ISO 75 138° C.

Aufgabe der vorliegenden Erfindung ist es, eine hochtemperaturbeständige, thermoplastische Zusammensetzung zur Verfügung zu stellen, die über eine hohe Fließfähigkeit und Oberflächenqualität ohne Vernetzungserscheinungen beim Compoundierschritt verfügt, eine gute Schlagzähigkeit mit hoher Steifigkeit vereint und kostengünstig herstellbar ist.

Erfindungsgemäß gelingt die Lösung der Aufgabe überraschenderweise durch Zusatz von exfolierten Schichtsilikaten, wobei ein Teil der Aminoendgruppen des Polyamids zunächst mit dem organophil modifizierten, anorganischen Schichtsilikat umgesetzt wird. Die Aminogruppen stehen somit nicht mehr für eine Reaktion mit den Maleinsäureanhydridgruppen des Poly(styrol-co-maleinsäureimid)-Copolymeren zur Verfügung. Somit wird eine Vernetzung im Compoundierextruder verhindert.

Für die erfindungsgemäße Zusammensetzung kommen folgende Komponenten zum Einsatz:
(A) ein thermoplastisches Polyamid
(B) ein Poly(styrol-co-maleinsäureimid)-Copolymeres
(C) einen Schlagzäh-Modifier
(D) ein mit organischen Ionen modifizierten Schichtsilikat

Ohne den Zusatz der Komponente (D) in den erfindungsgemäßen, hochtemperaturbeständigen, thermoplastischen Zusammensetzungen und die darauf angepasste Verfahrenstechnik wäre die Herstellung von Blends aus bisterminierten Polyamiden und Poly(styrol-co-maleinsäureimid)-Copolymeren mit guter Fließfähigkeit und Oberflächenqualität nicht möglich.

Überraschenderweise führt darüber hinaus die gezielte Auswahl der Komponente (B) und (C) in Funktionalität und Molekulargewicht zu einem überlegenen Eigenschaftsbild, wie es in der Aufgabenstellung und den Beispielen formuliert ist.

Bevorzugte Komponenten (A) umfassen Polyamid 6, Polyamid 66, Polyamid 46, Polyamid MXD 6 oder eine Mischung dieser Polyamide, wobei Komponente (A) zu 100 Gewichtsanteilen enthalten ist.

Das Poly(styrol-co-maleinsäureimid)-Copolymere der Komponente (B) mit einem Rest unreagierter Maleinsäureanhydridgruppen weist ein mittleres Molekulargewicht zwischen 80.000 und 200.000 auf.

Der Gehalt an unreagierten Maleinsäureanhydridgruppen bei dem Poly(styrol-co-maleinsäureimid)-Copolymeren beträgt zwischen 0,1 bis 10 mol% und der Gehalt an Maleinimidgruppen zwischen 0,1 bis 50 mol%, die Glasübergangstemperatur liegt dabei zwischen 150 und 195° C.

Der Gewichtsanteil der Komponente (B), bezogen auf Komponente (A), kann zwischen 0,1 und 50 Teilen betragen.

Die Schlagzähmodifier der Komponente (C) umfassen Naturkautschuk, Polybutadien, Polyisopren, Polyisobutylen, Mischpolymerisate des Butadiens und/oder Isoprens mit Styrol und anderen Comonomeren, hydrierte Produkte und/oder solche, die durch Pfropfen mit Maleinsäureanhydrid, Ithaconsäureanhydrid, (Meth)acrylsäure und deren Ester entstanden sind. Möglich sind auch Pfropfkautschuke mit einem vernetzen elastomeren Kern, der aus Butadien, Isopren oder Alkylacrylaten besteht und eine Pfropfhülle aus Polystyrol hat. Weiterhin kommen in Frage unpolare oder polare Olefinhomo- und Copolymere wie Ethylen-Propylen-, Ethylen-Propylen-Dien- und Ethylen-Octen- oder Ethylen-Vinylacetat-Kautschuke oder unpolare oder polare Olefinhomo- und Copolymere, die durch Pfropfen mit Maleinsäureanhydrid, Ithaconsäureanhydrid, (Meth)acrylsäure und deren Ester entstanden sind.

Besonders bevorzugte Komponenten (C) sind durch Pfropfen mit Maleinsäureanhydrid funktionalisierte Mischpolymere des Butadiens mit Styrol und unpolare oder polare Olefinhomo- und Copolymere, die durch Pfropfen mit Maleinsäureanhydrid entstanden sind.

Der Gewichtsanteil der Komponente (C), bezogen auf die Komponente (A), kann zwischen 0,01 und 50 Teilen betragen.

Bevorzugte Komponenten (D) sind Zwei- und Dreischichtsilikate der Phyllosilikate, ausgewählt aus Montmorillonit und/oder Hektorit und/oder Saponit und/oder Vermiculit, und/oder Smektit, und/oder Illit, und/oder Sepiolit und/oder Palygorskit, und/oder Muscovit, und/oder Allevardit, und/oder Amesit und/oder Fluorhectorit, und/oder Beidellit und/oder Talkum, und/oder Nontronit, und/oder Stevensit, und/oder Bentonit, und/oder Glimmer, und/oder Fluorvermiculit, und/oder Halloysit und/oder Fluor enthaltende synthetische Talkumtypen, die entsprechend der ionischen Schichtladung durch Ionenaustausch mit organischen Kationen modifiziert sind.

Organische Kationen gemäß vorstehender Beschreibung sind protonierte primäre, sekundäre oder tertiäre Amine, protonierte basische Heteroatomverbindungen wie z. B. Imidazole mit variablen Substituenten, Amidine, Harnstoffe oder Iminoether, oder eine quarternäre Ammoniumverbindung, die als Substituenten über mindestens eine Alkyl- oder funktionalisierte Alkylgruppe mit mehr als sechs Methylgruppen verfügt. Besonders bevorzugt ist die Organophilierung mit Stearylamin, Aminododecansäure oder mit 2-hydroxyalkyl-substituierten Imidazolen.
Organische Kationen gemäß vorstehender Beschreibung können weiterhin auch Metallsalze von aromatischen, aliphatischen, araliphatischen und cycloaliphatischen Carbonsäuren, Sulfonsäuren oder Phosphorsäuren sein, die bevorzugt mindestens eine Alkylgruppe mit mehr als 6 C-Atomen enthalten.

Bevorzugte Komponenten (D) sind auch Hydrotalcite, die entsprechend der ionischen Schichtladung durch lonenaustausch mit Carboxylatkomponenten modifiziert sind.
Carboxylatkomponenten gemäß vorstehender Beschreibung sind primäre Carboxylate, die als Substituenten über eine Alkyl- oder funktionalisierte Alkylgruppe mit mehr als sechs Methylgruppen verfügen. Der Gewichtsanteil der Komponente (D), bezogen auf die Komponente (A), kann zwischen 1 und 50 Teilen, besonders bevorzugt zwischen 0,1 - 30 Teilen, betragen.

Die erfindungsgemäße, silikatverstärkte, hochtemperaturbeständige, thermoplastische Zusammensetzung kann bis zu 200 Gewichtsanteile Zusätze, bezogen auf die Komponente (A) enthalten: Bis zu 5 Gewichtsanteile Gleit- oder Verarbeitungshilfsmittel, bis zu 5 Gewichtsanteile Pigmente, bis zu 2 Gewichtsanteile Nukleierungsmittel, bis zu 1 Gewichtsanteil Stabilisatoren, bis zu 2 Gewichtsanteile Treibmittel, bis zu 2 Gewichtsanteile Antistatika, bis zu 100 Gewichtsanteile Prozessöle, bis zu 100 Gewichtsanteile weitere Füllstoffe und/oder Flammschutzmittel und bis zu 100 Gewichtsanteile Glasfasern.

Die erfindungsgemäßen, silikatverstärkten, hochtemperaturbeständigen, thermoplastischen Zusammensetzungen werden in bekannter Weise durch Mischen und Erwärmen der einzelnen Komponenten, vorzugsweise unter Einwirkung von Scherkräften, in einem Aufbereitungsaggregat hergestellt. Sie lassen sich mittels Extrusions- oder Spritzgussverfahren zur Herstellung von Formteilen oder Halbzeugen verarbeiten.

In den folgenden Ausführungsbeispielen wird die vorliegende Erfindung verdeutlicht. Die Zusammensetzungen sind in Gewichtsanteilen (T), bezogen auf 100 Gewichtsanteile der Komponente (A) angegeben, und betragen in den folgenden Beispielen:

| Beispiel 1: | Beispiel 2: | Beispiel 3: |
|---|---|---|
| 100 T Nanoverstärktes Polyamid 6 (Komponente A) [1] | 100 T Nanoverstärktes Polyamid 66 (Komponente A) [2] | 100 T Nanoverstärktes Polyamid 66 (Komponente A) [2] |
| 45,4 T Poly(styrol-co-maleinsäureimid)-copolymeres (Komponente B) [3] | 45,4 T Poly(styrol-comaleinsäureimid)-copolymeres 1 (Komponente B) [3] | 45,4 T Poly(styrol-comaleinsäureimid)-copolymeres 2 (Komponente B) [4] |
| 36,4 T Schlagzähmodifier (Komponente(C)) [5] | 36,4 T Schlagzähmodifier (Komponente (C)) [5 | 36,4 T Schlagzähmodifier (Komponente (C)) [5] |

| Vergleichsbeispiel 1: | Vergleichsbeispiel 2: |
|---|---|
| 100 T Polyamid 6 [6] | 100 T Polyamid 66 [7] |
| 45,4 T Poly(styrol-comaleinsäureimid)copolymeres [3] | 45,4 T Poly(styrol-comaleinsäureimid)copolymeres [3] |
| 36,4 T Schlagzähmodifier [5] | 36,4 T Schlagzähmodifier [5] |

[1] 5%-Nanoverstärktes Polyamid 6 im Beispiel 1 oder 3: E-Modul 4523 MPa; Reißdehnung 5.5 %; Zugfestigkeit 75.2 MPa; Röntgendiffraktometrie (CuKα -Linie) kein Schichtabstandsreflex
[2] Nanoverstärktes Polyamid 66 im Beispiel 2: E-Modul 3635 MPa; Reißdehnung 6.0 %; Zugfestigkeit 82.8 MPa; Röntgendiffraktometrie (CuKα-Linie) kein Schichtabstandsreflex
[3] Polystyrolcopolymeres 1: Poly(styrol-co-maleinsäureimid), Mw = 150.000, Gehalt an Maleinimidgruppen 39 mol%, Glasübergangstemperatur 195 °C
[4] Polystyrolcopolymeres 2: Poly(styrol-co-maleinsäureimid), Mw = 140.000, Gehalt an Maleinimidgruppen 39 mol%, Glasübergangstemperatur 195 °C
[5] Schlagzähmodifier: Maleinsäureanhydrid-funktionalisiertes Styrol-Ethylen/Butadien-Styrol-Triblockcopolymer, MFR [g/10min] 22 bei 230°C/5kg; Styrol/EB-Verhältnis 30/70
[6] Polyamid im Vergleichsbeispiel 1: Polyamid 6, Schmelzpunkt 220°C, spezifische Dichte 1,10 g/cm³
[7] Polyamid im Vergleichsbeispiel 2: Polyamid 66, Schmelzpunkt 260°C, spezifische Dichte 1,12 g/cm³

### Herstellung des nanoverstärkten Polyamid 6:

In einem Doppelschneckenextruder mit Dosiereinrichtung für Granulate wird bei Temperaturen größer 240°C granulatförmiges Polyamid 6 dosiert. Über die Pulverwaage wird der Nanofüllstoff (organischer Modifier: C₁₈ n-Alkylgruppe; Kohlenstoffgehalt ca 38%, spezifische Dichte 1,8g/cm3; Feuchtigkeit 3,0%; Reinheit 98,5%, mittlerer Partikeldurchmesser 36µm, Schichtabstand 3,4nm) zudosiert und die Mischung aufgeschmolzen, strangförmig extrudiert und geschnitten. Das resultierende Thermoplastgemisch hat die unter [1] angegebenen Eigenschaften. Eine röntgenografische Untersuchung des nanoverstärkten Polyamid 6 zeigt aufgrund der Exfolierung der Schichtsilikate keinen Schichtabstandsreflex.

### Herstellung des nanoverstärkten Polyamid 66:

In einem Doppelschneckenextruder mit Dosiereinrichtung für Granulate wird bei Temperaturen größer 260°C granulatförmiges Polyamid 66 dosiert.
Über die Pulverwaage wird der Nanofüllstoff (organischer Modifier: C₁₈ n-Alkylgruppe; Kohlenstoffgehalt ca 38%, spezifische Dichte 1,8g/cm3; Feuchtigkeit 3,0%; Reinheit 98,5%, mittlerer Partikeldurchmesser 36µm, Schichtabstand 3,4nm)zudosiert und die Mischung aufgeschmolzen, strangförmig extrudiert und geschnitten. Das resultierende Thermoplastgemisch hat die unter [2] angegebenen Eigenschaften.
Eine röntgenografische Untersuchung des nanoverstärkten Polyamid 66 zeigt aufgrund der Exfolierung der Schichtsilikate keinen Schichtabstandsreflex.

### Beispiel 1:

In einem Doppelschneckenextruder mit Dosiereinrichtung für Granulate werden bei Temperaturen größer 240°C granulatförmiges nanoverstärktes Polyamid 6 (Komponente A+D), Polystyrolcopolymeres (Komponente B) und Schlagzähmodifier (Komponente C) dosiert, die Mischung wird aufgeschmolzen, strangförmig extrudiert und geschnitten. Das resultierende Thermoplastgemisch hat die in der Tabelle angegebenen Eigenschaften.

### Beispiel 2:

In einem Doppelschneckenextruder mit Dosiereinrichtung für Granulate werden bei Temperaturen größer 260°C granulatförmiges nanoverstärktes Polyamid 66 (Komponente A+D), Polystyrolcopolymeres (Komponente B) und Schlagzähmodifier (Komponente C) dosiert, die Mischung wird aufgeschmolzen, strangförmig extrudiert und geschnitten. Das resultierende Thermoplastgemisch hat die in der Tabelle angegebenen Eigenschaften.

### Beispiel 3:

In einem Doppelschneckenextruder mit Dosiereinrichtung für Granulate werden bei Temperaturen größer 260°C granulatförmiges nanoverstärktes Polyamid 66 (Komponente A+D), Polystyrolcopolymeres (Komponente B) und Schlagzähmodifier (Komponente C) dosiert, die Mischung wird aufgeschmolzen, strangförmig extrudiert und geschnitten. Das resultierende Thermoplastgemisch hat die in der Tabelle angegebenen Eigenschaften.

### Vergleichsbeispiel 1:

In einem Doppelschneckenextruder mit Dosiereinrichtung für Granulate werden bei Temperaturen größer 240°C granulatförmiges Polyamid 6 [6], Polystyrolcopolymeres und Schlagzähmodifier dosiert, die Mischung wird aufgeschmolzen, strangförmig extrudiert und geschnitten. Das resultierende Thermoplastgemisch hat die in der Tabelle angegebenen Eigenschaften.

### Vergleichsbeispiel 2:

In einem Doppelschneckenextruder mit Dosiereinrichtung für Granulate werden bei Temperaturen größer 260°C granulatförmiges Polyamid 66 [7], Polystyrolcopolymeres und Schlagzähmodifier dosiert, die Mischung wird aufgeschmolzen, strangförmig extrudiert und geschnitten. Das resultierende Thermoplastgemisch hat die in der Tabelle angegebenen Eigenschaften.

Mechanische Eigenschaften der erfindungsgemäßen Zusammensetzungen im Vergleich zum Stand der Technik

| Eigenschaft | Einheit | Norm | Beispiel 1 | Beispiel 2 | Beispiel 3 | Vergleichsbeispiel 1 | Vergleichsbeispiel 2 |
|---|---|---|---|---|---|---|---|
| E-Modul | [MPa] | ISO 527 | 2330 | 2418 | 2458 | 2036 | 2100 |
| Schlagzähigkeit | [kJ/m²] | ISO 179 | oBr* | 65,3 | 57,4 | Br* | 19,7 |
| Vicat B50 | [°C] | DIN ISO 306 | 154 | 160 | 158 | 138 | 134 |
| Reißdehnung | [%] | DIN 53504 | 36,5 | 8,1 | 9,3 | 38,8 | 3,1 |
| MFR [280°C/5kg] | [g/10min] | DIN ISO 1133 | 15,2 | 16,3 | 17,4 | 24,7 | Nicht mehr meßbar |

| | | | | | | | |
|---|---|---|---|---|---|---|---|
| * ohne Bruch | | | | | | | |

## Patentansprüche

1. Silikatverstärkte, hochtemperaturbeständige, thermoplastische Zusammensetzung, umfassend
(A) ein thermoplastisches Polyamid
(B) ein Poly(styrol-co-maleinsäureimid)-Copolymeres
(C) einen Schlagzähmodifier
(D) ein mit organischen Ionen modifiziertes Schichtsilikat,
wobei ein Teil der Aminoendgruppen des Polyamids der Komponente (A) in einem ersten Schritt mit dem modifizierten Schichtsilikat der Komponente (D) umgesetzt wird, bevor in einem zweiten Schritt dann die Komponenten (B) und (C) zugesetzt werden.

2. Zusammensetzung gemäß Anspruch 1, wobei die Komponente (A) ausgewählt ist aus der Gruppe Polyamid 66, Polyamid 46, Polyamid MXD6 oder aus einer Mischung dieser Polyamide.

3. Zusammensetzung gemäß Anspruch 1, wobei die Komponente (B) ein Poly(styrol-co-maleinsäureimid)-Copolymeres mit einem Rest unreagierter Maleinsäureanhydridgruppen ist und ein gewichtsmittleres Molekulargewicht zwischen 80.000 und 200.000 aufweist, der Gehalt an unreagierten Maleinsäureanhydridgruppen beim Poly(styrol-co-maleinsäureimid)-Copolymeren zwischen 0,1 und 10 mol% und der Gehalt an Maleinimidgruppen zwischen 0,1 und 50 mol%, beträgt, und die Glasübergangstemperatur zwischen 150 und 195° C liegt.

4. Zusammensetzung gemäß Anspruch 1, wobei die Komponente (C) ausgewählt ist aus der Gruppe Mischpolymerisate des Butadiens und/oder Isoprens mit Styrol und anderen Comonomeren, hydrierte Produkte und/oder solche, die durch Pfropfen mit Maleinsäureanhydrid, Ithaconsäureanhydrid, (Meth)acrylsäure und deren Ester entstanden sind, oder unpolare oder polare Olefinhomo- und Copolymere, die durch Pfropfen mit Maleinsäureanhydrid, Ithaconsäureanhydrid, (Meth)acrylsäure oder deren Ester entstanden sind.

5. Zusammensetzung gemäß Anspruch 1, wobei Komponente (D) aus einem oder mehreren 2- und 3-Schichtsilikaten besteht, die entsprechend ihrer ionischen Schichtladung durch lonenaustausch mit Ammoniumkomponente oder Carboxylatkomponente organophil modifiziert sind.

6. Zusammensetzung nach den Ansprüchen 1 und 5, wobei die organischen Schichtsilikate Phyllosilikate sind, ausgewählt aus Montmorillonit und/oder Hektorit und/oder Bentonit und/oder Glimmer und/oder Fluor enthaltende synthetische Talkumtypen oder ein anionenaustauschfähiges Hydrotalcit.

7. Zusammensetzung gemäß Anspruch 5, wobei die Ammoniumkomponente ein protoniertes primäres, sekundäres oder tertiäres Amin, eine protonierte basische Heteroatomverbindung oder eine quarternäre Ammoniumverbindung ist, die als Substituenten über mindestens eine Alkyl- oder funktionalisierte Alkylgruppe mit mehr als sechs Methylgruppen verfügt.

8. Zusammensetzung gemäß Anspruch 5, wobei die Carboxylatkomponente ein primäres, Carboxylat ist, das als Substituent über eine Alkyl- oder funktionalisierte Alkylgruppe mit mehr als sechs Methylgruppen verfügt.

9. Zusammensetzung gemäß einer der Ansprüche 1 - 8, zusätzlich umfassend die Zugabe von bis zu 200 Gewichtsanteilen, bezogen auf die Komponente (A), in Form von bis zu 5 Gewichtsanteilen Gleit- oder Verarbeitungshilfsmittel, bis zu 5 Gewichtsanteilen Pigmente, bis zu 2 Gewichtsanteilen Nukleierungsmittel, bis zu 1 Gewichtsanteil Stabilisatoren, bis zu 2 Gewichtsanteilen Treibmittel, bis zu 2 Gewichtsanteilen Antistatika, bis zu 100 Gewichtsanteilen Prozessöle, bis zu 100 Gewichtsanteilen Füllstoffe und/oder Flammschutzmittel, bis zu 100 Gewichtsteilen Glasfasern.

10. Verwendung der silikatverstärkten thermoplastischen Zusammensetzung gemäß einer der Ansprüche 1 bis 9 zur Herstellung von Formteilen oder Halbzeugen.

11. Verfahren zur Herstellung einer silikatverstärkten thermoplastischen Zusammensetzung gemäß einem der vorhergehenden Ansprüche, wobei in einem ersten Compoundierschritt ein Teil der Aminoendgruppen des Polyamids der Komponente (A) mit dem mit organischen Ionen modifiziertem Schichtsilikat der Komponente (D) umgesetzt wird, bevor in einem zweiten Schritt dann Komponenten (B) und (C) zugesetzt werden.

## Claims

1. Silicate-reinforced, high-temperature-resistant, thermoplastic composition, comprising
(A) a thermoplastic polyamide
(B) a poly(styrene-co-maleimide) copolymer
(C) an impact modifier
(D) a layer silicate modified with organic ions,
where a portion of the amino end groups of the polyamide of component (A) is reacted in a first step with the modified layer silicate of component (D), before, in a second step, components (B) and (C) are then added.

2. Composition according to Claim 1, where component (A) has been selected from the group of nylon-6,6, nylon-4,6, nylon-MXD, 6, or from a mixture of these polyamides.

3. Composition according to Claim 1, where component (B) is a poly(styrene-co-maleimide) copolymer having a residue of unreacted maleic anhydride groups and has a weight-average molecular weight of from 80 000 to 200 000, the content of unreacted maleic anhydride groups in the poly(styrene-co-maleimide) copolymer is from 0.1 to 10 mol%, and the content of maleimide groups is from 0.1 to 50 mol%, and the glass transition temperature is from 150 to 195°C.

4. Composition according to Claim 1, where component (C) has been selected from the group of copolymers of butadiene and/or of isoprene with styrene and with other comonomers, hydrogenated products and/or those obtained via grafting with maleic anhydride, itaconic anhydride, (meth)acrylic acid and esters thereof, or non-polar or polar olefin homo- and copolymers obtained via grafting with maleic anhydride, itaconic anhydride, (meth)acrylic acid or esters thereof.

5. Composition according to Claim 1, where component (D) is composed of one or more 2- and 3-layer silicates which have been organophilically modified in a manner corresponding to their ionic layer charge via ion exchange with an ammonium component or carboxylate component.

6. Composition according to Claims 1 and 5, where the organic layer silicates are phyllosilicates selected from montmorillonite and/or hectorite and/or bentonite and/or mica and/or fluorine-containing synthetic grades of talc or a hydrotalcite capable of anion exchange.

7. Composition according to Claim 5, where the ammonium component is a protonated primary, secondary or tertiary amine, a protonated basic heteroatom compound or a quaternary ammonium compound which has, as substituents, at least one alkyl or functionalized alkyl group having more than six methyl groups.

8. Composition according to Claim 5, where the carboxylate component is a primary carboxylate which has, as substituent, an alkyl or functionalized alkyl group having more than six methyl groups.

9. Composition according to any of Claims 1 to 8, also encompassing addition of up to 200 parts by weight, based on component (A), in the form of up to 5 parts by weight of lubricants or processing aids, up to 5 parts by weight of pigments, up to 2 parts by weight of nucleating agents, up to 1 part by weight of stabilizers, up to 2 parts by weight of blowing agents, up to 2 parts by weight of antistatic agents, up to 100 parts by weight of processing oils, up to 100 parts by weight of fillers and/or flame retardants, up to 100 parts by weight of glass fibres.

10. Use of the silicate-reinforced thermoplastic composition according to any of Claims 1 to 9 for production of mouldings or of semifinished products.

11. Process for preparation of a silicate-reinforced thermoplastic composition according to any of the preceding claims, where, in a first compounding step, a portion of the amino end groups of the polyamide of component (A) is reacted with the layer silicate of component (D) which has been modified with organic ions, before, in a second step, components (B) and (C) are then added.

## Revendications

1. Composition thermoplastique, résistant aux températures élevées et renforcée par silicate, comprenant
(A) un polyamide thermoplastique,
(B) un copolymère poly(styrène-co-maléimide),
(C) un modificateur d'impact,
(D) un silicate lamellaire modifié par des ions organiques,
où une partie des groupes terminaux amino du polyamide du composant (A) est mise à réagir, dans une première étape, avec le silicate lamellaire modifié du composant (D), avant que, dans une deuxième étape, les composants (B) et (C) soient alors ajoutés.

2. Composition selon la revendication 1, dans laquelle le composant (A) est choisi parmi le groupe constitué du nylon 6,6, du nylon 4,6, du nylon MXD6 ou d'un mélange de ces polyamides.

3. Composition selon la revendication 1, dans laquelle le composant (B) est un copolymère poly(styrène-co-maléimide) avec un résidu de groupes anhydride maléique, n'ayant pas réagi et présentant un poids moléculaire moyen en poids de 80 000 à 200 000, la teneur en groupes anhydride maléique n'ayant pas réagi dans le copolymère poly(styrène-co-maléimide) est de 0,1 à 10 % en moles et la teneur en groupes maléique est de 0,1 à 50 % en moles, et la température de transition vitreuse est de 150 à 195°C.

4. Composition selon la revendication 1, dans laquelle le composant (C) a été choisi parmi le groupe constitué de copolymères du butadiène et/ou de l'isoprène avec le styrène et d'autres comonomères, de produits hydrogénés et/ou de ceux qui ont été obtenus par greffage avec l'anhydride maléique, l'anhydride itaconique, l'acide (méth)acrylique et leurs esters, ou d'homopolymères et de copolymères oléfiniques non polaires ou polaires, qui ont été obtenus par greffage avec l'anhydride maléique, l'anhydride itaconique, l'acide (méth)acrylique ou leurs esters.

5. Composition selon la revendication 1, dans laquelle le composant (D) est composé d'un ou de plusieurs silicates bi-lamellaires et tri-lamellaires, qui ont fait l'objet d'une modification organophile en fonction de leur charge lamellaire ionique par échange d'ions avec un composant ammonium ou un composant carboxylate.

6. Composition selon les revendications 1 et 5, dans laquelle les silicates lamellaires organiques sont des phyllosilicates choisis parmi une montmorillonite et/ou une hectorite et/ou une bentonite et/ou un mica et/ou des types de talc synthétiques contenant du fluor ou une hydrotalcite capable d'un échange d'anions.

7. Composition selon la revendication 5, dans laquelle le composant ammonium est une amine primaire, secondaire ou tertiaire protonée, un composé hétéroatomique basique protoné ou un composé ammonium quaternaire, qui dispose d'au moins un groupe alkyle ou groupe alkyle fonctionnalisé renfermant plus de six groupes méthyle en tant que substituant.

8. Composition selon la revendication 5, dans laquelle le composant carboxylate est un carboxylate primaire qui dispose d'un groupe alkyle ou groupe alkyle fonctionnalisé renfermant plus de six groupes méthyle en tant que substituant.

9. Composition selon l'une quelconque des revendications 1 à 8, comprenant en outre l'addition de jusqu'à 200 parties en poids, par rapport au composant (A), sous la forme de jusqu'à 5 parties en poids de lubrifiants ou d'auxiliaires de mise en oeuvre, de jusqu'à 5 parties en poids de pigments, de jusqu'à 2 parties en poids d'agents de nucléation, de jusqu'à 1 partie en poids d'agents stabilisants, de jusqu'à 2 parties en poids d'agents gonflants, de jusqu'à 2 parties en poids antistatiques, de jusqu'à 100 parties en poids d'huiles de traitement, de jusqu'à 100 parties en poids de charges et/ou d'agents ignifugeants, et de jusqu'à 100 parties en poids de fibres de verre.

10. Utilisation de la composition thermoplastique renforcée par silicate selon l'une quelconque des revendications 1 à 9 pour la production de pièces moulées ou de produits semi-finis.

11. Procédé de préparation d'une composition thermoplastique renforcée par silicate selon l'une quelconque des revendications précédentes, dans lequel, dans une première étape de mélangeage, une partie des groupes terminaux amino du polyamide du composant (A) est mise à réagir avec le silicate lamellaire modifié par des ions organiques du composant (D), avant que, dans une deuxième étape, les composés (B) et (C) soient alors ajoutés.
